# EUROPÄISCHE PATENTANMELDUNG

(11) **EP 3 462 561 A1**
(43) Veröffentlichungstag der Anmeldung: **03.04.2019**
(21) Anmeldenummer: 17194138.8
(22) Anmeldetag: 29.09.2017
(51) Int. Cl.: H02J 3/38, H02H 7/12

(54) **SCHALTUNGSANORDNUNG ZUM SCHALTEN VON WECHSELRICHTERGERÄTEN**

(71) Anmelder: Fronius International GmbH, 4643 Pettenbach (AT)
(72) Erfinder: Gerstlacher, Florian, 4643 Pettenbach (AT); Fischereder, Franz, 4643 Pettenbach (AT); Breuer, Stefan, 4643 Pettenbach (AT); Grabner, Thomas, 4643 Pettenbach (AT)
(74) Vertreter: Isarpatent

(57) **Zusammenfassung**

Schaltungsanordnung 1 zum sicheren Schalten von Wechselrichtergeräten 2 einer Anlage durch einen gemeinsamen Notschalter 3, der an einem Schaltsignaleingang 4 eines der Wechselrichtergeräte 2 angeschlossen ist, das als Master der Anlage konfiguriert ist und einen Schaltsignalausgang 5 aufweist, an dem andere als Slave konfigurierte Wechselrichtergeräte 2 der Anlage über Schaltsignalleitungen 6 angeschlossen sind, wobei die als Slave konfigurierten Wechselrichtergeräte 2 zusammen mit dem als Master konfigurierten Wechselrichtergerät 2 eine Schaltkette bilden, welche bei Betätigung des Notschalters 3 automatisch geschaltet wird.

## Beschreibung

Die Erfindung betrifft eine Schaltungsanordnung zum sicheren Schalten von Wechselrichtergeräten einer Anlage, insbesondere einer Photovoltaikanlage. Eine technische Anlage kann mehrere seriell oder parallel verschaltete Wechselrichtergeräte aufweisen. In vielen Anwendungsfällen ist es erforderlich diese Wechselrichtergeräte mit einem einzigen gemeinsamen Notschalter auszuschalten. In herkömmlichen Anlagen können die Wechselrichter seriell oder parallel mit einem derartigen Notschalter verbunden werden. Allerdings kann es hierbei zu Verdrahtungsfehlern kommen. Weiterhin besteht die Möglichkeit, dass ein Wechselrichtergerät der Anlage ausfällt bzw. defekt ist.

Es ist daher eine Aufgabe der vorliegenden Erfindung eine Schaltungsanordnung zum sicheren Schalten von Wechselrichtergeräten einer Anlage zu schaffen, die es erlaubt mit einem einzigen gemeinsamen Notschalter die Wechselrichtergeräte der Anlage sicher zu schalten.

Diese Aufgabe wird erfindungsgemäß durch eine Schaltungsanordnung mit den in Patentanspruch 1 beschriebenen Merkmalen gelöst.

Die Erfindung schafft gemäß einem ersten Aspekt eine Schaltungsanordnung zum sicheren Schalten von Wechselrichtergeräten einer Anlage durch einen gemeinsamen Notschalter, der an einem Schaltsignaleingang eines der Wechselrichtergeräte angeschlossen ist, das als Master der Anlage konfiguriert ist und einen Schaltsignalausgang aufweist, an dem andere als Slave konfigurierte Wechselrichtergeräte der Anlage über Schaltsignalleitungen angeschlossen sind, wobei die als Slave konfigurierten Wechselrichtergeräte zusammen mit dem als Master konfigurierten Wechselrichtergerät eine Schaltkette bilden, welche bei Betätigung des Notschalters automatisch geschaltet wird.

Bei einer möglichen Ausführungsform der erfindungsgemäßen Schaltungsanordnung weisen die Wechselrichtergeräte der Schaltkette jeweils vierpolige Anschlussklemmen auf, die jeweils einen zweipoligen Schaltsignaleingang und einen zweipoligen Schaltsignalausgang umfassen.

Bei einer möglichen Ausführungsform der erfindungsgemäßen Schaltungsanordnung sind der zweipolige Schaltsignaleingang und der zweipolige Schaltsignalausgang der Anschlussklemme des Wechselrichtergerätes zur Vermeidung von Ausgleichsströmen zwischen den Wechselrichtergeräten der Schaltkette voneinander potentialgetrennt.

Bei einer weiteren möglichen Ausführungsform der erfindungsgemäßen Schaltungsanordnung sind der zweipolige Schaltsignaleingang und der zweipolige Schaltsignalausgang der Anschlussklemme des Wechselrichtergerätes durch eine Optokopplerschaltung voneinander potentialgetrennt.

Bei einer weiteren möglichen Ausführungsform der erfindungsgemäßen Schaltungsanordnung wird ein defektes oder ausgefallenes Wechselrichtergerät innerhalb der Schaltkette mittels einer in dem Wechselrichtergerät enthaltenen Überbrückungsschaltung automatisch überbrückt.

Bei einer weiteren möglichen Ausführungsform der erfindungsgemäßen Schaltungsanordnung ist die Überbrückungsschaltung des Wechselrichtergerätes zwischen dem Schaltsignaleingang und dem Schaltsignalausgang der Anschlussklemme des Wechselrichtergerätes vorgesehen.

Bei einer weiteren möglichen Ausführungsform der erfindungsgemäßen Schaltungsanordnung weist die Überbrückungsschaltung des Wechselrichtergerätes je Schaltsignalleitung zumindest eine in Flussrichtung geschalteten Diode auf.

Bei einer weiteren möglichen Ausführungsform der erfindungsgemäßen Schaltungsanordnung erfolgt eine Konfiguration eines der Wechselrichtergeräte der Anlage als Master einer Schaltkette mittels eines an dem Wechselrichtergerät vorgesehenen Konfigurationsschalters.

Bei einer weiteren möglichen Ausführungsform der erfindungsgemäßen Schaltungsanordnung werden die Wechselrichtergeräte der Schaltkette ausgehend von dem als Master konfigurierten Wechselrichtergerät über Schaltsignalleitungen kaskadenförmig schrittweise deaktiviert oder aktiviert.

Bei einer weiteren möglichen Ausführungsform der erfindungsgemäßen Schaltungsanordnung ist der Notschalter ein passiver Schalter, der an einem Schaltsignaleingang des als Master konfigurierten Wechselrichtergeräts der Anlage angeschlossen ist.

Bei einer weiteren möglichen Ausführungsform der erfindungsgemäßen Schaltungsanordnung weist jedes Wechselrichtergerät der Schaltkette einen Gleichstromeingang zum Anschluss von Solarpaneelen auf, die bei Sonnenlichteinstrahlung einen Gleichstrom erzeugen, welcher durch eine in dem Wechselrichtergerät vorgesehene Stromwandlerschaltung in einen Wechselstrom umgewandelt wird.

Bei einer weiteren möglichen Ausführungsform der erfindungsgemäßen Schaltungsanordnung wird bei Aktivierung eines Wechselrichtergerätes der Schaltkette ein in dem Wechselrichtergerät vorgesehenes AC-Relais geschlossen, um den durch die in dem Wechselrichtergerät vorgesehene Stromwandlerschaltung erzeugten Wechselstrom an ein Stromnetz abzugeben.

Bei einer weiteren möglichen Ausführungsform der erfindungsgemäßen Schaltungsanordnung weist die Schaltungsanordnung ausschließlich Hardwarekomponenten auf.

Bei einer weiteren möglichen Ausführungsform der erfindungsgemäßen Schaltungsanordnung ist die Schaltungsanordnung einfehlersicher ausgebildet.

Bei einer weiteren möglichen Ausführungsform der erfindungsgemäßen Schaltungsanordnung wird bei einem Verkabelungsfehler das betreffende Wechselrichtergerät automatisch in einen sicheren Betriebszustand geschaltet.

Die Erfindung umfasst ferner gemäß einem weiteren zweiten Aspekt eine Photovoltaikanlage mit den in Patentanspruch 16 angegebenen Merkmalen.

Die Erfindung schafft demnach eine Photovoltaikanlage mit Photovoltaikstrings, die jeweils an ein zugehöriges Wechselrichtergerät angeschlossen sind, wobei die Wechselrichtergeräte der Photovoltaikanlage mittels einer Schaltungsanordnung gemäß dem ersten Aspekt der Erfindung durch Betätigung eines gemeinsamen Notschalters sicher schaltbar sind.

Die Erfindung schafft ferner gemäß einem weiteren dritten Aspekt ein Wechselrichtergerät für eine Anlage mit den in Patentanspruch 17 angegebenen Merkmalen.

Die Erfindung schafft demnach ein Wechselrichtergerät für eine Anlage, insbesondere für eine Photovoltaikanlage, wobei das Wechselrichtergerät
einen Schaltsignaleingang zum Anschließen eines Notschalters der Anlage oder zum Anschließen eines Schaltsignalausgangs eines anderen Wechselrichtergerätes der Anlage und einen Schaltsignalausgang zum Anschließen eines Schaltsignaleingangs eines anderen Wechselrichtergerätes der Anlage aufweist,
wobei das Wechselrichtergerät bei Anschluss eines Notschalters an seinem Schaltsignaleingang mittels eines an dem Wechselrichtergerät vorgesehenen Konfigurationsschalters als Master einer Schaltkette der Anlage konfigurierbar ist, die das als Master konfigurierte Wechselrichtergerät selbst und alle an dessen Schaltsignalausgang kettenförmig nachgeschalteten und als Slave konfigurierte Wechselrichtergeräte umfasst, wobei die gesamte Schaltkette bei Betätigung des an dem Schaltsignaleingang des als Master konfigurierten Wechselrichtergerätes angeschlossenen Notschalters automatisch geschaltet wird.

Im Weiteren werden mögliche Ausführungsformen der verschiedenen Aspekte der Erfindung unter Bezugnahme auf die beigefügten Figuren erläutert.

Es zeigen:
Fig. 1 ein Blockschaltbild einer möglichen Ausführungsform einer Schaltungsanordnung gemäß einem ersten Aspekt der vorliegenden Erfindung;
Fig. 2 ein Blockschaltbild zur Darstellung eines Ausführungsbeispieles einer Photovoltaikanlage gemäß einem weiteren Aspekt der Erfindung.

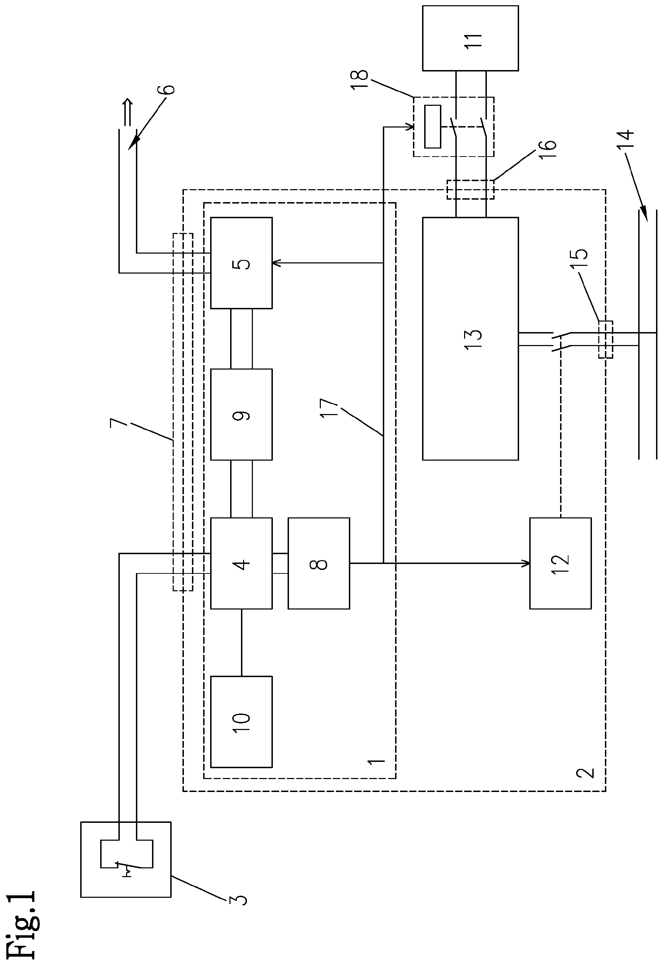

Wie man aus Fig. 1 erkennen kann, kann eine erfindungsgemäße Schaltungsanordnung 1 gemäß dem ersten Aspekt der vorliegenden Erfindung in einem Wechselrichtergerät 2 einer Anlage vorgesehen werden. Bei dem in Fig. 1 dargestellten Ausführungsbeispiel ist eine Schaltungsanordnung 1, die zum sicheren Schalten von Wechselrichtergeräten einer Anlage durch einen gemeinsamen Notschalter 3 dient, jeweils in den zu schaltenden Wechselrichtergeräten 2 integriert. In einer bevorzugten Ausführungsform besitzen die verschiedenen Wechselrichtergeräte 2 einer Anlage, insbesondere einer Photovoltaikanlage, jeweils eine zugehörige Schaltungsanordnung 1, wie in Fig. 1 dargestellt, wobei die Schaltungsanordnung 1 vorzugsweise in dem Wechselrichtergerät 2 integriert ist. Bei einer alternativen Ausführungsform kann die Schaltungsanordnung 1 des Wechselrichtergerätes 2 auch eine separate an das Wechselrichtergerät 2 angeschlossene Schaltung bilden. Die Anlage, beispielsweise eine Photovoltaikanlage, kann mehrere in einer Schaltkette miteinander verschaltete Wechselrichtergeräte 2 aufweisen.

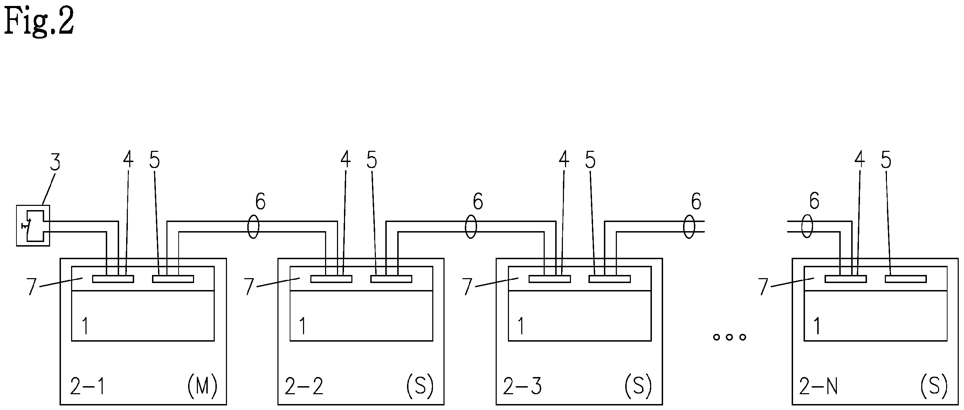

Fig. 2 zeigt ein Ausführungsbeispiel, in dem eine Schaltkette SK aus mehreren Wechselrichtergeräten 2 der Anlage besteht. Die verschiedenen Wechselrichtergeräte 2 bilden einen Schaltverbund bzw. eine Schaltkette SK, die mittels eines einzigen gemeinsamen Notschalters bzw. Notausschalters 3 einfehlersicher abgeschaltet werden können.

Die Schaltungsanordnung 1 eines Wechselrichtergerätes 2 besitzt einen Schaltsignaleingang 4 und einen Schaltsignalausgang 5 wie in dem Blockschaltbild gemäß Fig. 1 dargestellt. Die verschiedenen Wechselrichtergeräte 2 können jeweils als ein Mastergerät M oder als ein Slavegerät S konfiguriert werden. Ein Wechselrichtergerät 2 der Schaltkette SK wird als Master M der betreffenden Schaltkette der Anlage konfiguriert. An dem Schaltsignaleingang 4 desjenigen Wechselrichtergeräts 2, welches als Master M der Schaltkette SK bzw. der Anlage konfiguriert ist, ist ein Notschalter 3 für die gesamte Schaltkette SK angeschlossen. Bei dem in Fig. 1 dargestellten Blockschaltbild kann das Wechselrichtergerät 2 als Master M der Schaltkette SK konfiguriert werden und der Notschalter 3 wird an den Schaltsignaleingang 4 dieses Wechselrichtergerätes 2 angeschlossen. Der Schaltsignalausgang 5 des Wechselrichtergerätes 2, welches als Master M der Anlage konfiguriert ist, ist über Schaltsignalleitungen 6 mit einem anderen als Slave S konfigurierten Wechselrichtergerät 2 der Anlage verbunden. Bei dem in Fig. 1 dargestellten Blockschaltbild, welches ein als Master M konfiguriertes Wechselrichtergerät 2 der Schaltkette darstellt, ist der Schaltsignalausgang 5 über zwei Schaltsignalleitungen 6 mit einem (nicht dargestellten) Schaltsignaleingang 4 eines nachgeschalteten Wechselrichtergerätes 2 verbunden, das als Slave bzw. Slavegerät (S) konfiguriert ist. Dieses Slave-Wechselrichtergerät 2 besitzt seinerseits einen Schaltsignalausgang, der über Schaltsignalleitungen 6 mit dem nächsten ebenfalls als Slave S konfigurierten Wechselrichtergerät 2 der Schaltkette SK verbunden ist. Eine Schaltkette mit einer vorgegebenen Anzahl N von Wechselrichtergeräten 2 umfasst demnach vorzugsweise ein einziges als Master M konfiguriertes Wechselrichtergerät 2, wie es beispielsweise in Fig. 1 dargestellt ist, und N-1 als Slave S konfigurierte Wechselrichtergeräte 2. Die als Slave S konfigurierten N-1 Wechselrichtergeräte 2 bilden zusammen mit dem als Master M konfigurierten Wechselrichtergerät 2 eine Schaltkette SK der Anlage. Die gesamte Schaltkette SK wird bei Betätigung des Notschalters 3, welcher an dem Schaltsignaleingang 4 des ersten als Master M konfigurierten Wechselrichtergerätes 2-1 angeschlossen ist, automatisch abgeschaltet bzw. stromlos geschaltet.

In einer möglichen Ausführungsform weisen die verschiedenen Wechselrichtergeräte 2 der Schaltkette SK jeweils vierpolige Anschlussklemmen 7 auf, wie in dem Blockschaltbild gemäß Fig. 1 dargestellt. Die vierpolige Anschlussklemme 7 umfasst jeweils einen zweipoligen Schaltsignaleingang 4 und einen zweipoligen Schaltsignalausgang 5.

Zur Vermeidung von Ausgleichsströmen zwischen den verschiedenen Wechselrichtergeräten 2 der Schaltkette SK sind der zweipolige Schaltsignaleingang 4 und der zweipolige Schaltsignalausgang 5 der Anschlussklemme 7 des Wechselrichtergerätes 2 vorzugsweise voneinander potentialgetrennt. Bei der in Fig. 1 dargestellten Ausführungsform enthält die Schaltungsanordnung 1 eine entsprechende Potentialtrennungsschaltung 8.

In einer möglichen Ausführungsform der erfindungsgemäßen Schaltungsanordnung 1 sind der zweipolige Schaltsignaleingang 4 und der zweipolige Schaltsignalausgang 5 der Anschlussklemme 7 des Wechselrichtergerätes 2 durch eine Optokopplerschaltung als Potentialtrennungsschaltung 8 voneinander potentialgetrennt. Die Potentialtrennungsschaltung 8 besitzt bei einer möglichen Ausführungsform für jede der beiden Schaltsignalleitungen 6 des Schaltsignaleingangs 4 einen Optokoppler, der eine Leuchtdiode und einen zugehörigen Phototransistor umfasst. Die Konfiguration des Wechselrichtergerätes 2 als Mastergerät M oder als Slavegerät S erfolgt vorzugsweise mittels eines an dem Wechselrichtergerät 2 vorgesehenen Konfigurationsschalters 10. Bei einer möglichen Ausführungsform wird der Konfigurationsschalter 10 durch einen DIP-Schalter gebildet. Bei einer bevorzugten Ausführungsform ist der Konfigurationsschalter 10 eine Hardwareschaltkomponente, die vorzugsweise manuell betätigbar ist, um das betreffende Wechselrichtergerät 2 als Mastergerät M oder als Slavegerät S zu konfigurieren bzw. umzukonfigurieren.

Die Wechselrichtergeräte 2 einer Schaltkette SK werden ausgehend von dem als Master M konfigurierten Wechselrichtergerät 2-1 über Schaltsignalleitungen 6 kaskadenförmig bzw. schrittweise deaktiviert, nachdem der Notschalter 3, der an dem als Master M konfigurierten Wechselrichtergerät 2 vorgesehen ist, durch einen Nutzer bzw. eine Person betätigt worden ist. Bei dem Notschalter 3 handelt es sich vorzugsweise um einen passiven Schalter, der an dem Schaltsignaleingang 4 des als Master M konfigurierten Wechselrichtergeräts 2-1 der Anlage angeschlossen ist. Bei dem in Fig. 1 dargestellten Ausführungsbeispiel ist ein passiver Notschalter 3 an dem Schaltsignaleingang 4 des Wechselrichtergerätes 2 angeschlossen. Dieses Wechselrichtergerät 2 ist mithilfe seines Konfigurationsschalters 10 als Master M der Schaltkette SK konfiguriert. Sobald ein Nutzer den Notschalter 3 betätigt, wird zunächst das als Master M konfigurierte Wechselrichtergerät 2 ausgeschaltet bzw. deaktiviert. Anschließend werden über die Schaltsignalleitungen 6 schrittweise die übrigen nachgeschalteten Wechselrichtergeräte 2 der Schaltkette SK, welche von den zugehörigen Konfigurationsschaltern 10 jeweils als Slavegeräte S konfiguriert worden sind, abgeschaltet.

Bei dieser Ausführungsform können somit mithilfe des Notschalters 3 alle Wechselrichtergeräte 2 einer Schaltkette SK in kurzer Zeit kaskadenförmig bzw. schrittweise automatisch deaktiviert werden. In dieser Ausführungsform bildet der Notschalter 3 einen Notausschalter, beispielsweise zur Notausschaltung einer Photovoltaikanlage.

In einer alternativen Ausführungsform kann der Notschalter 3 auch zur schrittweisen Aktivierung von Wechselrichtergeräten einer Anlage verwendet werden. Bei dieser alternativen Ausführungsform bildet der Notschalter 3 einen Noteinschalter der betreffenden Anlage.

Bei der in Fig. 1 dargestellten Ausführungsform des Wechselrichtergerätes 2 ist zwischen dem Schaltsignaleingang 4 und dem Schaltsignalausgang 5 der Schaltungsanordnung 1 eine Überbrückungsschaltung 9 vorgesehen. Ein defektes oder ausgefallenes Wechselrichtergerät 2 innerhalb der Schaltkette SK wird mittels der in dem Wechselrichtergerät 2 enthaltenen Überbrückungsschaltung 9 vorzugsweise automatisch überbrückt. Bei einer möglichen Ausführungsform weist die Überbrückungsschaltung 9 des Wechselrichtergerätes 2 je Schaltsignalleitung 6 zumindest eine in Flussrichtung geschaltete Diode auf. Je Schaltsignalleitung ist eine Diode vorgesehen, die in Flussrichtung geschaltet ist, um in einem Fehlerfall des betreffenden Wechselrichtergerätes 2 innerhalb der Schaltkette das defekte Wechselrichtergerät 2 automatisch zu überbrücken. Einzelne defekte Wechselrichtergeräte können somit automatisch überbrückt werden und führen nicht zu einem Ausfall des gesamten Systems bzw. der gesamten Anlage. Die Überbrückungsschaltung 9 bildet somit eine Bypassschaltung, die bei Ausfall eines Wechselrichtergerätes 2 dieses ausgefallene Wechselrichtergerät überbrückt.

Bei dem in Fig. 1 dargestellten Ausführungsbeispiel wird das Wechselrichtergerät 2 innerhalb einer Photovoltaikanlage verwendet. Solarpaneele 11 sind über eine RSB (Rapid Shutdown Box) Schaltanordnung 18 an einen Gleichstrom bzw. DC-Eingang 16 des Wechselrichtergerätes 2 angeschlossen, wie in Fig. 1 dargestellt. Bei einer Notausbetätigung des Notausschalters 3 führt dies zu einer Trennung der Solarpaneele 11 von dem Wechselrichtergerät 2 indem die RSB-Schaltungsanordnung 18 geöffnet wird. Bei dem in Fig. 1 dargestellten Ausführungsbeispiel ist der Ausgang der Potentialtrennungsschaltung 8 über Freigabeleitungen 17 sowohl mit dem Schaltsignalausgang 5 als auch mit der RSB Schaltstufe 18 verbunden. Bei einer möglichen Ausführungsform kann die Kommunikation zu der RSB-Schaltanordnung 18 auch mithilfe von Powerline Communication (PLC) auf Gleichstromleitungen erfolgen. Jedes Wechselrichtergerät 2 der Schaltkette besitzt einen Gleichstromeingang 16 zum Anschluss von Solarpaneelen 11. Diese Solarpaneele 11 erzeugen bei Sonnenlichteinstrahlung einen Gleichstrom, welcher bei geschlossenem RSB-Schalter 18 über den DC-Eingang 16 einer Stromwandlerschaltung 13 des Wechselrichtergerätes 2 zugeführt wird. Die in dem Wechselrichtergerät 2 vorgesehene Stromwandlerschaltung 13 wandelt den erhaltenen Gleichstrom (DC) in einen Wechselstrom (AC) um. Bei Aktivierung eines Wechselrichtergerätes 2 der Schaltkette SK wird ein an den Wechselrichtergerät 2 vorgesehenes AC-Relais 12 geschlossen, um den durch die Stromwandlerschaltung 13 erzeugten Wechselstrom (AC) über einen AC-Ausgang 15 des Wechselrichtergerätes 2 an ein Stromnetz 14 abzugeben, wie in Fig. 1 schematisch dargestellt. In Folge einer Notausbetätigung des Notausschalters 3 werden die RSB-Schaltungsanordnung 18 getrennt bzw. geöffnet, damit keine Energie in die Wechselrichtergeräte 2 der Schaltkette SK eingespeist wird. Ferner werden die AC-Relais 12 geöffnet, um die Wechselrichtergeräte 2 vom Stromnetz 14 zu trennen.

Bei einer bevorzugten Ausführungsform weist die Schaltungsanordnung 1 ausschließlich Hardwarekomponenten auf. Darüber hinaus ist die Schaltungsanordnung 1 vorzugsweise einfehlersicher ausgebildet. Normative Vorgaben können darin bestehen, dass der Ausfall eines einzelnen Bauteils bzw. einer einzelnen Komponenten in einer sicherheitskritischen Anwendung bzw. sicherheitskritischen Anlage nicht zu einer möglicherweise gefährlichen Fehlfunktion führen. Bei einer bevorzugten Ausführungsform ist die Schaltungsanordnung 1 demnach einfehlersicher ausgebildet, d.h. bei Ausfall eines einzelnen Bauteils bzw. einzelnen Baukomponente der Schaltungsanordnung 1 hat dies noch keine Auswirkung auf die Funktionsfähigkeit des Schaltmechanismus, insbesondere des Abschaltmechanismus. Derartige Einzelfehler umfassen beispielsweise einen Kurzschluss zwischen zwei benachbarten Pins von Bauelementen oder einen Kurzschluss eines Pins eines Bauelementes bzw. Bauteils gegen eine Versorgungsspannung bzw. Masse. Weitere mögliche Einzelfehler umfassen beispielsweise fehlerhafte offene Verbindungen zwischen Bauteilen bzw. Komponenten der Schaltungsanordnung 1. Auch ein Fehlverhalten einer implementierten Software oder eine Fehlverdrahtung können Fehlerquellen bilden. Um ein Fehlverhalten durch Software weitestgehend auszuschließen, wird daher die Schaltungsanordnung 1 vorzugsweise ausschließlich aus Hardwarekomponenten bzw. Hardwarebauteilen gebildet. Die Einfehlersicherheit der Schaltungsanordnung 1 wird bei einer bevorzugten Ausführungsform durch redundantes Vorsehen von Bauteilen bzw. Bauelementen erreicht. Beispielsweise werden die verschiedenen Bauteile bzw. Bauelemente der Schaltungsanordnung 1 jeweils doppelt bzw. zweifach vorgesehen. Weiterhin kann durch Vorsehen geeigneter Abstände zwischen den Bauelementen bzw. Bauteilen bzw. deren Anschlusspins die Wahrscheinlichkeit für das Auftreten eines Kurzschlusses verringert werden.

In einer bevorzugten Ausführungsform der erfindungsgemäßen Schaltungsanordnung 1 führt somit das isolierte Auftreten eines einzigen Fehlers nicht zu einer Einschränkung der Funktionsfähigkeit der Schaltungsanordnung 1.

Bei einer weiteren möglichen Ausführungsform der erfindungsgemäßen Schaltungsanordnung 1 wird bei einem Verkabelungsfehler das betreffende Wechselrichtergerät 2 automatisch in einen sicheren Betriebszustand geschaltet.

Fig. 2 zeigt Ausführungsbeispiele für eine Schaltkette SK, welche aus mehreren miteinander verschalteten Wechselrichtergeräten 2 gebildet ist. An dem ersten Wechselrichtergerät 2 der Schaltkette SK ist ein externer Notschalter 3 angeschlossen. Dieses erste Wechselrichtergerät 2-1 ist mithilfe eines zugehörigen Konfigurationsschalters 10 als Master M der Schaltkette SK konfiguriert. Die Anzahl der nachgeschalteten Slave-Wechselrichtergeräte 2 kann je nach Anwendungsfall variieren. Durch Betätigung des Notschalters 3 kann die gesamten Schaltkette SK geschaltet werden. Bei einer möglichen Ausführungsform werden in Folge der Betätigung des Notschalters 3 alle Wechselrichtergeräte 2 der Schaltkette SK vorzugsweise nacheinander kaskadenförmig deaktiviert. Beispielsweise können Wechselrichtergeräte 2 einer Schaltkette SK innerhalb einer Photovoltaikanlage innerhalb kurzer Zeit automatisch mithilfe des Notschalters 3 deaktiviert werden. Bei einer alternativen Ausführungsform können mithilfe des Notschalters 3 auch Wechselrichtergeräte 2 der Schaltkette SK automatisch aktiviert bzw. angeschaltet werden.

Wie man in Fig. 2 erkennen kann, ist die Verkabelung der verschiedenen Wechselrichtergeräte 2-i innerhalb der Schaltkette SK besonders einfach und erfolgt vorzugsweise mit zwei Schaltsignalleitungen 6 zwischen zwei benachbarten Wechselrichtergeräten. Die Konfiguration bzw. Umkonfiguration der Wechselrichtergeräte 2 erfolgt durch einen zugehörigen jeweils daran vorgesehenen Konfigurationsschalter 10.

Jedes Wechselrichtergerät 2 der Schaltkette SK verfügt über eine integrierte Überbrückungsschaltung bzw. Bypassschaltung 9, sodass jedes Wechselrichtergerät 2 bei Ausfall automatisch überbrückt wird. Zudem sind die verschiedenen Wechselrichtergeräte vorzugsweise durch eine Optokopplerschaltung bzw. Potentialtrennstufe 8 voneinander potentialgetrennt, um ungewollte Ausgleichsströme zwischen den Wechselrichtergeräten 2 der Schaltkette SK zu vermeiden. Die in Fig. 2 dargestellte Schaltkette SK ist vorzugsweise eine reine Hardwareschaltung und enthält keine Softwarekomponenten. Dies erleichtert die Zertifizierung der Schaltkette SK, insbesondere einer Schaltkette innerhalb einer Photovoltaikanlage. Durch die ausschließliche Verwendung von Hardwarekomponenten kann die Funktionsfähigkeit der Anlage leicht nachvollzogen werden, wodurch eine mögliche Zertifizierung ebenfalls erleichtert wird.

Weitere Ausführungsvarianten der erfindungsgemäßen Schaltungsanordnung sind möglich.

Beispielsweise kann einem Nutzer mittels einer optischen Anzeige angezeigt werden, ob das betreffende Wechselrichtergerät 2 mittels des zugehörigen Konfigurationsschalters 10 als Mastergerät M oder als Slavegerät S konfiguriert ist. Durch Betätigung des Konfigurationsschalters 10 kann dann das entsprechende Wechselrichtergerät 2 entsprechend den Anforderungen der Anlage durch einen Nutzer umkonfiguriert werden. Bei einer weiteren möglichen Ausführungsform können die verschiedenen Konfigurationsschalter 10 einer Schaltkette SK mit einer Logikschaltung verbunden sein, um zu überprüfen, ob die verschiedenen Wechselrichtergeräte 2 innerhalb einer Schaltkette SK geeignet konfiguriert worden sind. Vorzugsweise wird das erste Wechselrichtergerät 2-1 der Schaltkette SK, welches mit dem Notschalter 3 verbunden ist, als Master M konfiguriert und die übrigen Wechselrichtergeräte 2 der Schaltkette SK als Slave S konfiguriert. Die Logikschaltung kann automatisch überprüfen, ob die Konfiguration der verschiedenen Wechselrichtergeräte 2 innerhalb der Schaltkette SK korrekt vorgenommen worden ist oder nicht.

Bei einer weiteren möglichen Ausführungsform verfügt das Wechselrichtergerät 2 über eine Sensorik, um festzustellen, ob an seinem Schaltsignaleingang 4 ein anderes Wechselrichtergerät 2 vorgeschaltet ist oder ein Notschalter 3 angeschlossen worden ist. Stellt diese Sensorik fest, dass an dem Schaltsignaleingang 4 ein Notschalter 3 angeschlossen ist, kann bei einer möglichen Ausführungsform eine automatische Umkonfiguration des Wechselrichtergeräts 2 als Master M einer Schaltkette SK vorgenommen werden. Stellt die Sensorik umgekehrt fest, dass an dem Schaltsignaleingang 4 ein Schaltsignalausgang 5 eines vorgeschalteten Wechselrichtergerätes 2 der Schaltkette SK angeschlossen ist, wird das betreffende Wechselrichtergerät 2 in einer möglichen Ausführungsform automatisch als Slave-Wechselrichtergerät 2 konfiguriert. Bei dieser Ausführungsvariante erfolgt somit die Konfiguration bzw. Umkonfiguration automatisch bzw. halbautomatisch. Bei einer möglichen Ausführungsvariante wird eine fehlerhafte Konfiguration eines Wechselrichtergerätes 2 automatisch angezeigt. Beispielsweise wird das Wechselrichtergerät 2, an dessen Schaltsignaleingang 4 der Notschalter 3 angeschlossen ist, irrtümlicherweise mithilfe seines Konfigurationsschalters 10 nicht als Master M konfiguriert, kann dieser Konfigurationsfehler beispielsweise mittels einer Logikschaltung erkannt und dann einem Nutzer angezeigt werden.

Bei einer weiteren Ausführungsvariante kann angezeigt werden, ob die Überbrückungsschaltung 9 eine Überbrückung bei Auftreten eines Fehlers vorgenommen hat, d.h. es wird angezeigt, ob das betreffende Wechselrichtergerät 2 fehlerhaft ist und demzufolge vorzugsweise innerhalb der Schaltkette SK auszutauschen ist. Bei Betätigung des Notschalters 3 werden vorzugsweise gewissermaßen durch einen Dominoeffekt alle in der Schaltkette SK miteinander verschalteten Geräte nachfolgend aktiviert bzw. deaktiviert. Die Schaltung der verschiedenen Wechselrichtergeräte 2 innerhalb der Schaltkette SK erfolgt dabei vorzugsweise mit einer sehr hohen Schaltgeschwindigkeit. Mithilfe der Überbrückungsschaltung 9 bzw. der Bypassschaltung innerhalb der Schaltungsanordnung 1 wird erreicht, dass sich der Schalt-Dominoeffekt selbst bei Ausfall eines innerhalb der Schaltkette befindlichen fehlerhaften Gerätes bis hin zum Ende der Schaltkette SK fortsetzt.

Die Schaltungsanordnung 1 dient zum sicheren Schalten von Wechselrichtergeräten 2 für eine Anlage mit einem gemeinsamen Notschalter 3 und erlaubt somit einen wired shutdown (WSD) der betreffenden Anlage. Die erfindungsgemäße Schaltungsanordnung 1 kann bei einer möglichen Ausführungsform zum sicheren Ausschalten von Wechselrichtergeräten 2 einer Anlage mit einem einzigen gemeinsamen Notausschalter 3 verwendet werden. In einem alternativen Anwendungsfall kann die Schaltungsanordnung 1 auch zum Einschalten von verschiedenen Wechselrichtergeräten 2 einer Anlage mit einem einzigen gemeinsamen Schalter 3 verwendet werden.

In einer möglichen Ausführungsform wird die Anschlussklemme 7 durch einen vierpoligen X25-Anschluss gebildet. Beispielsweise bilden Pin 1 und Pin 2 der Anschlussklemme X25 den Schaltsignaleingang 4 und Pin 3 und Pin 4 der Anschlussklemme X25 den Schaltsignalausgang 5. Wenn der Schaltsignaleingang 4 an der Anschlussklemme 7 aktiviert wird, wird der Schaltsignalausgang 5 ebenfalls aktiviert. Durch die Verkabelung mithilfe der Schaltsignalleitungen 6 aktiviert der Schaltsignalausgang 5 den Schaltsignaleingang 4 des nachfolgenden Wechselrichtergeräts 2. Durch diesen Dominoeffekt können alle in der Schaltkette SK verschalteten Wechselrichtergeräte 2 nachfolgend aktiviert werden. Die Aktivierung kann bei einer ersten Variante darin bestehen, dass das betreffende Wechselrichtergerät 2 automatisch abgeschaltet wird. Alternativ kann die Aktivierung darin bestehen, dass das betreffende Wechselrichtergerät 2 automatisch eingeschaltet wird. Freigabeleitungen 17 innerhalb des Wechselrichtergerätes 2 bewirken, dass die interne Elektronik aktiviert wird und das zugehörige AC-Relais 12 geschaltet wird. Weiterhin erfolgt über die Freigabeleitungen 17 eine Aktivierung des Schaltsignalausgangs 5 der X25-Anschlussklemme 7.

Je nach Anwendungsfall sind weitere Ausführungsvarianten der erfindungsgemäßen Schaltungsanordnung 1 möglich. Beispielsweise können in einer möglichen Ausführungsform die Konfigurationsschalter 10 durch Steuerleitungen ersetzt werden, die mit einer zentralen Steuerungsschaltung der Anlage verbunden sind. Weiterhin kann ein Betriebszustand der Schaltungsanordnung 1 und/oder des Wechselrichtergerätes 2 dieser zentralen Steuerung der Anlage mitgeteilt werden. Beispielsweise kann mitgeteilt werden, ob ein Wechselrichtergerät 2 defekt ist oder nicht. Aufgrund der Überbrückungsschaltung 9 funktioniert die Schaltkette SK selbst bei Auftreten eines Defekts innerhalb des Wechselrichtergerätes 2 bzw. Auftreten eines Defekts innerhalb der Schaltungsanordnung 1. Ein defektes Wechselrichtergerät 2-i kann demzufolge ohne akuten Zeitdruck aus der Schaltkette SK entfernt werden, indem man den Schaltsignalausgang 5 des vorgeschalteten Wechselrichtergerätes 2-(i-1) mit dem Schaltsignaleingang des nachgeschalteten Wechselrichtergeräts 2-(i+1) mithilfe von Schaltsignalleitungen 6 direkt verbindet und das defekte Wechselrichtergerät 2-i entfernt. Alternativ wird das defekte Wechselrichtergerät durch ein fehlerfreies Wechselrichtergerät 2-i ersetzt. Die Schaltkette SK verbindet die verschiedenen Teilnehmer bzw. Wechselrichtergeräte 2 sicher miteinander und bietet zudem die Möglichkeit ausgefallene bzw. defekte Geräte 2 zu überbrücken. Mithilfe eines einzigen Notschalters 3 kann eine beliebige Anzahl N an Geräten bzw. Wechselrichtergeräten 2 je nach Anwendungsfall zuverlässig und schnell an- oder abgeschaltet werden. Längere Wegstrecken zwischen verschiedenen Wechselrichtergeräten 2 können beispielsweise mittels eines 12 V-Schaltpotentials und mittels entsprechenden Isolationsmaßnahmen erreicht werden.

### BEZUGSZEICHENLISTE

- 1: Schaltungsanordnung
- 2: Wechselrichtergerät
- 3: Notschalter
- 4: Schaltsignaleingang
- 5: Schaltsignalausgang
- 6: Schaltsignalleitungen
- 7: Anschlussklemme
- 8: Potentialtrennungsschaltung
- 9: Überbrückungsschaltung
- 10: Konfigurationsschalter
- 11: Solarpaneele
- 12: AC-Relais
- 13: Stromwandlerschaltung
- 14: Stromnetz
- 15: AC-Ausgang
- 16: DC-Eingang
- 17: interne Freigabeleitung
- 18: RSB

## Patentansprüche

1. Schaltungsanordnung (1) zum sicheren Schalten von Wechselrichtergeräten (2) einer Anlage durch einen gemeinsamen Notschalter (3),
der an einem Schaltsignaleingang (4) eines der Wechselrichtergeräte (2) angeschlossen ist, das als Master der Anlage konfiguriert ist und einen Schaltsignalausgang (5) aufweist, an dem andere als Slave konfigurierte Wechselrichtergeräte (2) der Anlage über Schaltsignalleitungen (6) angeschlossen sind, wobei die als Slave konfigurierten Wechselrichtergeräte (2) zusammen mit dem als Master konfigurierten Wechselrichtergerät (2) eine Schaltkette bilden, welche bei Betätigung des Notschalters (3) automatisch geschaltet wird.

2. Schaltungsanordnung nach Anspruch 1,
wobei die Wechselrichtergeräte (2) der Schaltkette jeweils vierpolige Anschlussklemmen (7) aufweisen, die jeweils einen zweipoligen Schaltsignaleingang (4) und einen zweipoligen Schaltsignalausgang (5) umfassen.

3. Schaltungsanordnung nach Anspruch 2,
wobei der zweipolige Schaltsignaleingang (4) und der zweipolige Schaltsignalausgang (5) der Anschlussklemme (7) des Wechselrichtergerätes (2) zur Vermeidung von Ausgleichsströmen zwischen den Wechselrichtergeräten (2) der Schaltkette voneinander potentialgetrennt sind.

4. Schaltungsanordnung nach Anspruch 3,
wobei der zweipolige Schaltsignaleingang (4) und der zweipolige Schaltsignalausgang (5) der Anschlussklemme (7) des Wechselrichtergerätes (2) durch eine Optokopplerschaltung voneinander potentialgetrennt sind.

5. Schaltungsanordnung nach einem der vorangehenden Ansprüche 1 bis 4,
wobei ein defektes oder ausgefallenes Wechselrichtergerät (2) innerhalb der Schaltkette mittels einer in dem Wechselrichtergerät (2) enthaltenen Überbrückungsschaltung (9) automatisch überbrückt wird.

6. Schaltungsanordnung nach Anspruch 5,
wobei die Überbrückungsschaltung (9) des Wechselrichtergerätes (2) zwischen dem Schaltsignaleingang (4) und dem Schaltsignalausgang (5) der Anschlussklemme (7) des Wechselrichtergerätes (2) vorgesehen ist.

7. Schaltungsanordnung nach Anspruch 6,
wobei die Überbrückungsschaltung (9) des Wechselrichtergerätes (2) je Schaltsignalleitung (6) zumindest eine in Flussrichtung geschaltete Diode aufweist.

8. Schaltungsanordnung nach einem der vorangehenden Ansprüche 1 bis 7,
wobei eine Konfiguration eines der Wechselrichtergeräte (2) der Anlage als Master mittels eines an dem Wechselrichtergerät (2) vorgesehenen Konfigurationsschalters (10) erfolgt.

9. Schaltungsanordnung nach einem der vorangehenden Ansprüche 1 bis 8,
wobei die Wechselrichtergeräte (2) der Schaltkette ausgehend von dem als Master konfigurierten Wechselrichtergerät (2) über Schaltsignalleitungen (6) kaskadenförmig schrittweise deaktiviert oder aktiviert werden.

10. Schaltungsanordnung nach einem der vorangehenden Ansprüche 1 bis 9,
wobei der Notschalter (3) ein passiver Schalter ist, der an einem Schaltsignaleingang (4) des als Master konfigurierten Wechselrichtergerätes (2) der Anlage angeschlossen ist.

11. Schaltungsanordnung nach einem der vorangehenden Ansprüche 1 bis 10,
wobei jedes Wechselrichtergerät (2) der Schaltkette einen Gleichstromeingang (16) zum Anschluss von Solarpaneelen (11) aufweist, die bei Sonnenlichteinstrahlung einen Gleichstrom erzeugen, welcher durch eine in dem Wechselrichtergerät (2) vorgesehene Stromwandlerschaltung (13) in einen Wechselstrom umgewandelt wird.

12. Schaltungsanordnung nach Anspruch 11,
wobei bei Aktivierung eines Wechselrichtergerätes (2) der Schaltkette ein in dem Wechselrichtergerät vorgesehenes AC-Relais (12) geschlossen wird, um den durch die im Wechselrichtergerät (2) vorgesehene Stromwandlerschaltung (13) erzeugten Wechselstrom an ein Stromnetz (14) abzugeben.

13. Schaltungsanordnung nach einem der vorangehenden Ansprüche 1 bis 12,
wobei die Schaltungsanordnung (1) ausschließlich Hardwarekomponenten aufweist.

14. Schaltungsanordnung nach einem der vorangehenden Ansprüche 1 bis 13,
wobei die Schaltungsanordnung (1) einfehlersicher ausgebildet ist.

15. Schaltungsanordnung nach einem der vorangehenden Ansprüche 1 bis 14,
wobei bei einem Verkabelungsfehler das betreffende Wechselrichtergerät (2) automatisch in einen sicheren Betriebszustand geschaltet wird.

16. Photovoltaikanlage mit Photovoltaikstrings, die jeweils an ein zugehöriges Wechselrichtergerät (2) angeschlossen sind, wobei die Wechselrichtergeräte (2) der Photovoltaikanlage mittels einer Schaltungsanordnung (1) nach einem der vorangehenden Ansprüche 1 bis 15 durch Betätigung eines gemeinsamen Notschalters (3) sicher abschaltbar sind.

17. Wechselrichtergerät (2) für eine Anlage, insbesondere für eine Photovoltaikanlage,
wobei das Wechselrichtergerät (2) aufweist:
- einen Schaltsignaleingang (4) zum Anschließen eines Notschalters (3) der Anlage oder zum Anschließen eines Schaltsignalausgangs eines anderen Wechselrichtergerätes der Anlage,
- einen Schaltsignalausgang (5) zum Anschließen eines Schaltsignaleingangs eines anderen Wechselrichtergerätes der Anlage,
- wobei Wechselrichtergerät (2) bei Anschluss eines Notschalters (3) an seinem Schaltsignaleingang (4) mittels eines daran vorgesehenen Konfigurationsschalters (10) als Master einer Schaltkette der Anlage konfigurierbar ist, die das als Master konfigurierte Wechselrichtergerät (2) selbst und alle an dessen Schaltsignalausgang (5) kettenförmig nachgeschalteten und als Slave konfigurierte Wechselrichtergeräte (2) umfasst,
wobei die gesamte Schaltkette bei Betätigung des an dem Schaltsignaleingang (4) des als Master konfigurierten Wechselrichtergerätes (2) angeschlossenen Notschalters (3) automatisch geschaltet wird.
